# EUROPÄISCHE PATENTSCHRIFT

(11) **EP 2 719 579 B1**
(45) Veröffentlichungstag und Bekanntmachung des Hinweises auf die Patenterteilung: **12.05.2021**
(21) Anmeldenummer: 13187824.1
(22) Anmeldetag: 09.10.2013
(51) Int. Cl.: B60Q 1/076

(54) **Scheinwerfer für ein Kraftfahrzeug**
Headlamps for a motor vehicle
Phare pour un véhicule automobile

(30) Priorität: 10.10.2012 AT 10992012
(43) Veröffentlichungstag der Anmeldung: 16.04.2014
(73) Patentinhaber: ZKW Group GmbH, 3250 Wieselburg (AT)
(72) Erfinder: Tiefenbacher, Tobias, 3252 Petzenkirchen (AT)
(74) Vertreter: Patentanwaltskanzlei Matschnig & Forsthuber OG

(56) Entgegenhaltungen:
- WO-A1-2005/032883
- DE-A1-102009 033 910
- FR-A3- 2 837 153

## Beschreibung

Die Erfindung betrifft einen Scheinwerfer für ein Kraftfahrzeug, umfassend eine erste optische Baueinheit, welche um eine erste Achse verschwenkbar gelagert ist, eine zweite optische Baueinheit, welche um eine zweite Achse verschwenkbar gelagert ist, wobei erste Achse und zweite Achse im Wesentlichen parallel zueinander verlaufen, wobei zumindest eine Einstellvorrichtung zum gleichzeitigen Verschwenken der beiden optischen Baueinheiten um deren Achsen vorgesehen ist.

Ein solcher Scheinwerfer ist beispielsweise aus der EP 1 391 347 B1 oder DE 10 2009 033 910 A1 bekannt. Bei diesem

Scheinwerfer können ein Abblendlichtmodul und ein Fernlichtmodul gemeinsam mit einer Einstellvorrichtung verschwenkt werden. Die Einstellvorrichtung ist dabei direkt mit einem der Lichtmodule verbunden. Die beiden Lichtmodule sind über ein Koppelelement derart verbunden, dass bei einem Verschwenken jenes Lichtmoduls, an welchem die Einstellvorrichtung angreift, über das Koppelelement auch das zweite Lichtmodul verschwenkt wird. Ein weiterer Scheinwerfer, bei welchem zwei Lichteinheiten um parallele Achsen gemeinsam verstell werden können, wobei die beiden Lichteinheiten mit einem Koppelelement miteinander verbunden sind, ist aus der DE 10 2004 051175 A1 bekannt.

Es ist eine Aufgabe der Erfindung, eine verbesserte Lösung für einen Scheinwerfer, bei dem zwei optische Baueinheiten mit einem Antrieb gemeinsam verschwenkt werden sollen, bereit zu stellen.

Diese Aufgabe wird durch einen Scheinwerfer gelöst, der die Merkmale des beiliegenden Anspruchs 1 umfasst.

Durch die Verwendung eines Koppelelementes, welches direkt die zumindest eine Einstellvorrichtung mit den beiden optischen Baueinheiten koppelt, kann der Bauraumbedarf gegenüber bisher bekannten Lösungen verringert werden. Dies ist insbesondere bei aktuellen Scheinwerfern von Vorteil, da durch immer höhere Anforderungen von Seiten des Fahrzeugdesigns, umgebender Technik und Funktionen sowie zusätzlicher Technik im Scheinwerfer der vorhandene Bauraum immer besser genutzt werden muss.

Auf Führungen im Gehäuse, wie sie bei bekannten Lösungen für das Kopplungselement der beiden Reflektoren teilweise notwendig sind, kann bei der erfindungsgemäßen Lösung verzichtet werden.

Somit verringert sich auch der Aufwand bei der genauen Bauteil- und Materialabstimmung und damit einhergehende Probleme können vermieden werden.

Bei einer konkreten Ausführungsform ist vorgesehen, dass das Koppelelement als längliches Koppelelement, beispielsweise in Form einer Koppelstange (stangenförmiges Koppelelement) ausgebildet ist.

Insbesondere ist vorgesehen, dass das Koppelelement starr ausgebildet ist.

Vorzugsweise ist die zumindest eine Einstellvorrichtung dazu eingerichtet, das längliche Koppelelement in Richtung seiner Längserstreckung linear hin- und her zu verschieben. Diese Verschiebebewegung wird, da das Koppelelement außerhalb der beiden im Wesentlichen zueinander parallelen Verschwenkachsen der beiden optischen Baueinheiten liegt, in eine Verschwenkbewegung der beiden optischen Baueinheiten um deren Achsen umgesetzt. Das Koppelelement erfährt dabei eine, wenn auch in der Regel geringe Verschiebung normal zu seiner Längserstreckung, da die Verbindungsstellen der optischen Baueinheiten mit dem Koppelelement einen Kreisbogen um die Verschwenkachsen der optischen Baueinheiten beschreiben.

Damit eine entsprechende Relativbewegung des Koppelelementes zu der zumindest einen Einstellvorrichtung möglich ist, ist daher mit Vorteil vorgesehen, dass die zumindest eine Einstellvorrichtung über eine Einstellvorrichtungs-Verbindungsstelle beweglich mit dem Koppelelement verbunden ist.

Konstruktiv von Vorteil ist es dabei, wenn die Einstellvorrichtungs-Verbindungsstelle, welche die zumindest eine Einstellvorrichtung mit dem Koppelelement verbindet, an einem Ende des Koppelelementes angeordnet ist.

Ebenso ist es konstruktiv von Vorteil, wenn eine der Verbindungsstellen an einem Ende des Koppelelementes, insbesondere an dem der Einstellvorrichtungs-Verbindungsstelle gegenüberliegenden Ende des Koppelelementes angeordnet ist.

Erfindungsgemäß ist es vorgesehen, dass genau eine optische Baueinheit weiters um eine zu den beiden Verschwenkachsen normal verlaufende Achse verschwenkbar ist.

Die entsprechend um zwei Achsen verschwenkbare optische Baueinheit kann dann, je nach Lage der Achse (siehe dazu weiter unten), beispielsweise in Höhenrichtung auf- und ab verstellt werden (durch Verschwenken um eine horizontale Achse), sowie links- und rechts um eine vertikale Achse (etwa zum Einstellen der Leuchtrichtung).

Wie oben schon kurz erwähnt, ist bei einer konkreten Realisierung der Erfindung vorgesehen, dass die beiden im Wesentlichen zueinander parallelen Achsen Horizontalachsen sind, welche vorzugsweise im Wesentlichen normal auf die optischen Achsen der optischen Baueinheiten stehen.

Um diese Horizontalachsen können die Baueinheiten auf und ab verschwenkt werden und so die Leuchtweite des jeweils mit der optischen Baueinheit erzeugten Lichtbündels eingestellt werden.

In diesem Fall kann bei einer weiteren Ausführungsform vorgesehen sein, dass die weitere, zu den beiden Verschwenkachsen normal verlaufende

Achse, um welche genau eine optische Baueinheit verschwenkbar ist, eine Vertikalachse ist.

Um diese Vertikalachse kann die Baueinheit nach links und rechts verschwenkt werden.

Die Begriffe "horizontal" und "vertikal" beziehen sich dabei auf die Einbaulage des Scheinwerfers in einem Fahrzeug.

Insbesondere bei Scheinwerfern, bei welche zwei optische Baueinheiten um parallele (z.B. horizontale) Achse gemeinsam verschwenkbar sind und eine Baueinheit weiters noch um eine zu diesen Achsen normale Achse (z.B. Vertikalachse) verschwenkbar ist, ist es wünschenswert, dass die Verschwenkbewegung um der einen Baueinheit um ihre zusätzliche Achse (Vertikalachse) unabhängig von der zweiten optischen Baueinheit erfolgt, also die zusätzliche Verschwenkbewegung der einen optischen Baueinheit um deren zweite Achse nicht auf die andere optische Baueinheit übertragen wird.

Bei einer Variante der Erfindung ist, um den weiter oben schon beschriebenen Versatz des länglichen Koppelelementes (in Folge der Kreisbewegung der Verbindungsstellen) zu ermöglichen, vorgesehen, dass zumindest eine der beiden Verbindungsstellen derart ausgebildet ist, dass das Koppelelement in Bezug auf die der Verbindungsstelle zugeordnete optische Baueinheit um eine Achse, welche parallel zu der Verschwenkachse der optischen Baueinheit verläuft, verschwenkbar ist.

Bei einer konkreten Ausführungsform des Scheinwerfer ist dabei vorgesehen, dass jene Verbindungsstelle, welche das Koppelelement mit einer um eine weitere, zweite Achse verschwenkbaren Baueinheit verbindet, derart ausgebildet ist, dass das Koppelelement in Bezug auf die der Verbindungsstelle zugeordnete optische Baueinheit um eine Achse, welche parallel zu der Verschwenkachse der optischen Baueinheit verläuft, beweglich ist.

Beispielsweise kann eine solche Verbindungsstelle einen Zapfen umfassen, welcher in Richtung der oben genannten Achse verläuft. Um diesen Zapfen, der beispielsweise an der Baueinheit angebracht bzw. mit dieser verbunden ist, ist das Koppelelement mit einer entsprechend angepassten Öffnung verschwenkbar gelagert. Genauso gut kann natürlich der Zapfen an dem Koppelelement angeordnet sein und die Öffnung sich in der Baueinheit befinden. Die optische Baueinheit und das Koppelelement sind entsprechend relativ zueinander um die genannte Achse verschwenkbar.

Eine solche Ausgestaltung der Verbindungsstelle wie oben beschrieben führt allerdings dazu, dass bei einem Verschwenken der zugehörigen optischen Baueinheit um ihre zweite, beispielsweise vertikale Achse das Koppelelement entsprechend mitbewegt wird.

Um nun zu verhindern, dass die zweite optische Baueinheit, ebenfalls in Folge einer Verschwenkbewegung der ersten Baueinheit bewegt wird, ist vorgesehen, dass jene Verbindungsstelle, welche das Koppelelement mit jener Baueinheit verbindet, welche lediglich um eine Achse verschwenkbar gelagert ist, derart ausgebildet ist, dass das Koppelelement und die Baueinheit zumindest in einer Ebene normal auf dieweitere, zu den beiden Verschwenkachsen normal verlaufende Verschwenkachse der um zwei Achsen verschwenkbaren Baueinheit relativ zueinander verschiebbar sind.

Die Verschiebungsbewegung des Koppelelementes, induziert von der Verschwenkung der ersten Baueinheit, wird somit von der zweiten Baueinheit entkoppelt.

Die zusätzliche, zweite (z.B. vertikale) Verschwenkachse läuft in diesem Fall durch die Einstellvorrichtungs-Verbindungsstelle, die dazu entsprechend ausgebildet sein muss, dass eine Verschwenkbewegung des Koppelelementes um diese Verschwenkachse möglich ist.

Bei einer weiteren, besonders bevorzugten Ausführungsform der Erfindung ist vorgesehen, dass zumindest eine der beiden Verbindungsstellen in Form eines Kugelgelenkes bzw. kugelgelenksartig ausgebildet ist.

Insbesondere ist dabei vorgesehen, dass jene Verbindungsstelle, welche das Koppelelement mit jener Baueinheit verbindet, welche um zwei Achsen verschwenkbar ist, als Kugelgelenk bzw. kugelgelenksartig ausgebildet ist.

Bei dieser Ausgestaltungsform kann sich bei einem Verschwenken der ersten Baueinheit um ihre zweite, beispielsweise vertikale Achse die erste Baueinheit um dieses Kugelgelenk relativ zu dem Koppelelement drehen, ohne eine Bewegung auf das Koppelelement zu übertragen.

Nachdem also das Koppelelement in diesem Fall bei einem Verschwenken der ersten Baueinheit um ihre zweite Achse nicht bewegt wird, wird auch die zweite Baueinheit von der Verschwenkbewegung der ersten Baueinheit nicht bewegt, eine Übertragung einer Verschwenkung der ersten Baueinheit um eine weitere Achse auf die zweite Baueinheit kann auf diese Weise verhindert werden.

Um Toleranzen, insbesondere Bauteiltoleranzen ausgleichen zu können, ist vorgesehen, dass jene Verbindungsstelle, welche das Koppelelement mit jener Baueinheit verbindet, welche lediglich um eine Achse verschwenkbar gelagert ist, derart ausgebildet ist, dass das Koppelelement und die Baueinheit zumindest in einer Ebene normal auf die weitere, zu den beiden Verschwenkachsen normal verlaufende Verschwenkachse der um zwei Achsen verschwenkbaren Baueinheit relativ zueinander verschiebbar sind.

Bei den optischen Baueinheiten kann es sich um Linsen, Reflektoren oder Lichtmodule handeln.

Vorzugsweise sind beide optische Baueinheiten vom selben Typ, d.h. der Scheinwerfer umfasst vorzugsweise zwei Linsen, zwei Lichtmodule, etc., welche um parallele Achsen verschwenkbar sind und wo eine der Linsen, Lichtmodule, etc. auch noch um eine zu diesen parallelen Achsen normal stehende Achse verschwenkbar ist.

Prinzipiell ist es aber auch möglich, dass die beiden optischen Baueinheiten auch von unterschiedlichem Typ sind. Es ist auch denkbar, dass jede optische Baueinheit aus mehreren solcher (auch gemischten) Typen aufgebaut ist - beispielsweise könnte eine Baueinheit aus zwei (oder mehr) Lichtmodulen bestehen, welche auf einem gemeinsamen Tragrahmen sitzen. Der Tragrahmen ist entsprechend über eine oder zwei Achsen verschwenkbar gelagert, sodass die gesamte Baueinheit, bestehend aus den zwei oder mehreren Lichtmodulen über diese Achse(n) verschwenkbar ist.

Damit beide optischen Baueinheiten bei einem Verschwenken um ihre parallelen, vorzugsweise horizontalen Achsen um den gleichen Winkelbetrag verschwenkt werden, ist weiters vorgesehen, dass der Normalabstand der ersten Verbindungsstelle zu der Verschwenkachse der zugeordneten optischen Baueinheit identisch zum Normalabstand der zweiten Verbindungsstelle zu der Verschwenkachse der zugeordneten optischen Baueinheit ist.

Grundsätzlich kann die Einstellvorrichtung zum gleichzeitigen Verschwenken der beiden optischen Baueinheiten um ihre parallelen Achsen eine manuell zu bedienende Einstellvorrichtung sein. Für eine automatische Einstellung ist es aber von Vorteil, wenn die Einstellvorrichtung ein Linear-Antrieb, insbesondere ein Linear-Motor, insbesondere ein elektrisches Linear-Antrieb ist.

Es kann aber auch vorgesehen sein, dass zwei Einstellvorrichtungen verwendet werden, z.B. eine Einstellvorrichtung etwa in Form eines Linear-Antriebes zum automatischen Verstellen der optischen Baueinheiten, also z.B. für eine automatische Leuchtweitenregelung, sowie eine manuell zu betätigende Einstellvorrichtung, mit welcher eine Grundeinstellung der optischen Baueinheiten eingestellt wird.

Der Linear-Antrieb ist dabei beispielsweise direkt über die entsprechende Verbindungsstelle mit dem Koppelelement gekoppelt, weiters ist der Linear-Antrieb zumindest in etwa in Längsrichtung des Koppelelementes verschiebbar gelagert. Die manuelle Einstelleinrichtung verschiebt bei einem Betätigen den Linear-Antrieb nach vorne oder hinten, und entsprechend werden über das Koppelelement auch die optischen Baueinheiten um ihre beiden parallelen Achsen in eine Grundeinstellung verschwenkt.

Im Betrieb des Fahrzeuges agiert dann nur noch der Linear-Antrieb, sodass ausgehend von der mit der manuellen Einstellvorrichtung eingestellten Grundeinstellung z.B. bei horizontalen parallelen Achsen dynamisch die Leuchtweite reguliert werden kann.

Im Folgenden ist die Erfindung an Hand der Zeichnung näher erörtert. In dieser zeigt
Fig. 1 eine perspektivische Ansicht der für die Erläuterung der Funktionsweise der Erfindung relevanten Bauteile eines erfindungsgemäßen Scheinwerfers,
Fig. 2 eine vergrößerte Seitenansicht der Bauteile aus Figur 1 im Bereich des Koppelelementes und der Einstellvorrichtungen,
Fig. 2a einen Schnitt durch die Figur 2 entlang der Linie A-A,
Fig. 3 das Koppelelement aus Figur 1 und 2 in einer vergrößerten Darstellung in einer Ansicht in Entsprechung zu Figur 2,
Fig. 4 das Koppelelement aus Figur 3 in einer weiteren Ansicht.

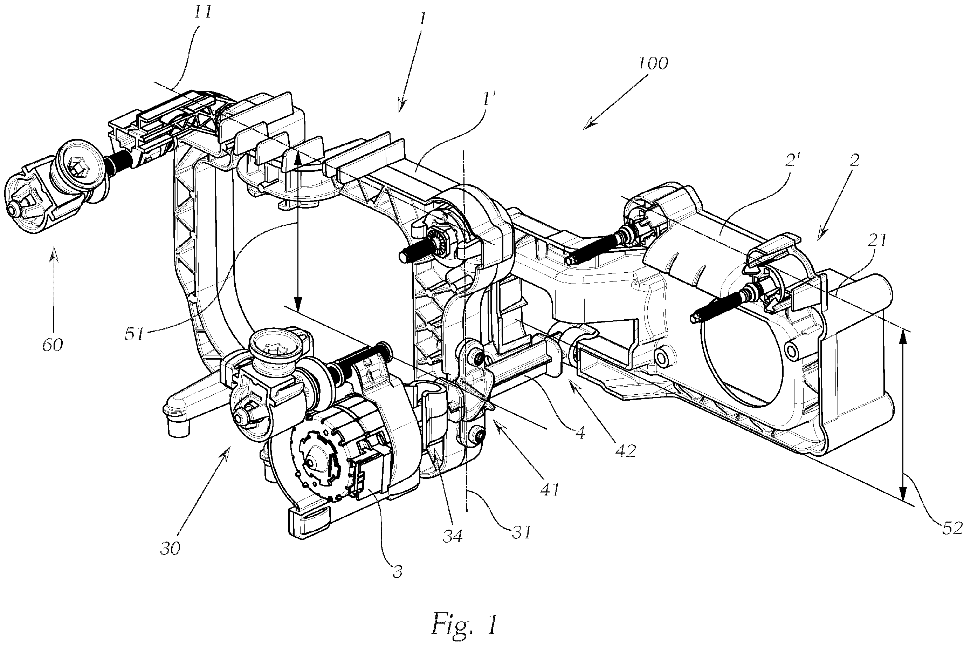

Figur 1 zeigt die erfindungswesentlichen Bestandteile eines Scheinwerfers 100 für ein Kraftfahrzeug. Der Scheinwerfer 100 umfasst eine erste optische Baueinheit 1, welche um eine erste, horizontale Achse 11 verschwenkbar gelagert ist.

Weiters umfasst der Scheinwerfer eine zweite optische Baueinheit 2, welche um eine zweite, horizontale Achse 21 verschwenkbar gelagert ist. Die beiden horizontalen Achsen 11, 21 verlaufen zueinander parallel und liegen normal zu der Lichtaustrittsrichtung der beiden optischen Baueinheiten 1, 2.

Bei den beiden optischen Baueinheiten handelt es sich in dem gezeigten Beispiel um Lichtmodule, die beispielsweise aus Lichtquelle, Reflektor, Linse und gegebenenfalls einer Blendenanordnung bestehen. Diese Lichtmodule sind jeweils in einem Träger 1', 2' gelagert, und die Träger 1', 2' sind um die beiden horizontalen Achsen 11, 21 schwenkbar gelagert (und somit auch die Lichtmodule 1, 2). Durch Verschwenken dieser Träger 1', 2' werden somit auch die Lichtmodule 1, 2, also die optischen Baueinheiten verschwenkt.

Zwecks besserer Übersicht in der Zeichnung sind die optischen Baueinheiten bzw. (an sich bekannten) Lichtmodule nicht dargestellt sondern lediglich mit den Bezugszeichen 1, 2 gekennzeichnet.

Es ist daher, wenn im Folgenden von einem Verschwenken der Lichtmodule 1, 2 um ihre Achsen die Rede ist, ein Verschwenken der Träger 1', 2' gemeint, welches natürlich auch zu einem Verschwenken der zugehörigen Lichtmodule 1, 2 führt.

Zum gleichzeitigen Verschwenken der beiden Lichtmodule 1, 2 bzw. Träger 1', 2' um deren Achsen 11, 21 ist eine Einstellvorrichtung 3 vorgesehen. Diese Einstellvorrichtung 3 ist bei der vorliegenden Ausführungsform als Linear-Antrieb ausgebildet. Mit diesem Linear-Antrieb 3 können die optischen Baueinheiten automatisch verstellt werden, z.B. für eine automatische Leuchtweitenregelung.

Weiters ist bei der gezeigten Ausführungsform noch eine weitere Einstellvorrichtung 30 vorgesehen, welche manuell zu betätigen ist, und mit welcher eine Grundeinstellung der optischen Baueinheiten um ihre Verschwenkachsen 11, 21 eingestellt werden kann.

Der Linear-Antrieb 3 ist dabei direkt über die entsprechende Verbindungsstelle 34 mit dem Koppelelement 4 gekoppelt, wie diese im Folgenden noch näher erläutert wird. Weiters ist der Linear-Antrieb 3 zumindest in etwa in Längsrichtung des Koppelelementes 4 verschiebbar gelagert. Mit der manuelle Einstelleinrichtung 30 kann der Linear-Antrieb 3 linear nach vorne oder hinten verschoben werden, über die Verbindungsstelle 34 wird diese Bewegung auf das Koppelelement 4 übertragen und in eine Verschwenkbewegung der optischen Baueinheiten 1, 2 um ihre beiden parallelen Achsen 11, 21 umgesetzt.

Im Betrieb des Fahrzeuges agiert dann nur noch der Linear-Antrieb 3, sodass ausgehend von der mit der manuellen Einstellvorrichtung 30 eingestellten Grundeinstellung dynamisch die Leuchtweite reguliert werden kann.

Für die grundsätzliche Funktionsweise der erfindungsgemäßen Verstellung ist es unerheblich, ob die Verstellung mittels des Linear-Antriebes 3 oder über die manuelle Einstellvorrichtung 30 erfolgt. Im Folgenden wird daher die Funktionsweise nur noch an Hand des Linear-Antriebes 3 erläutert.

Wie in Figur 1 weiters noch dargestellt, ist das erste Lichtmodul 1 noch um eine weitere, vertikale Achse 31 verschwenkbar gelagert. Um diese Vertikalachse kann das erste Lichtmodul 1 nach links und rechts verschwenkt werden.

Der Linear-Antrieb 3 ist mit einem Koppelelement 4 beweglich verbunden und treibt das Koppelelement 4, welches länglich und starr ausgebildet ist und im folgenden auch als Koppelstange 4 bezeichnet wird, im Wesentlichen linear an, d.h. die Koppelstange 4 kann von dem Linear-Antrieb 3 im Wesentlichen in seiner Längsrichtung hin- und her bewegt werden.

Die Koppelstange 4 ist an einem Ende über eine Einstellvorrichtungs-Verbindungsstelle 34 mit dem Linear-Antrieb 3 verbunden, an ihrem anderen Ende ist sie über eine zweite Verbindungsstelle 42 beweglich mit dem zweiten Lichtmodul 2 bzw. mit dem zweiten Träger 2' verbunden, während zwischen den beiden Ende eine erste Verbindungsstelle 41 liegt, mittels welcher die Koppelstange 4 beweglich mit dem ersten Lichtmodul 1 bzw. dem ersten Träger 1' verbunden ist.

Der Linear-Antrieb 3 ist, wie schon erwähnt, dazu eingerichtet, das längliche Koppelelement 4 in Richtung seiner Längserstreckung linear hin- und her zu verschieben. Diese Verschiebebewegung wird, da das Koppelelement 4 außerhalb der beiden im Wesentlichen zueinander parallelen Verschwenkachsen 11, 21, in eine Verschwenkbewegung der beiden Träger 1', 2' um deren Achsen umgesetzt.

Das Koppelelement 4 erfährt dabei eine, wenn auch in der Regel geringe Verschiebung normal zu seiner Längserstreckung, da die Verbindungsstellen 41, 42 einen Kreisbogen um die Verschwenkachsen 11, 21 beschreiben.

Damit eine entsprechende Relativbewegung des Koppelelementes 4 zu dem Linear-Antrieb 3 möglich ist, ist daher mit Vorteil vorgesehen, dass der Linear-Antrieb 3 über seine Verbindungsstelle 34 beweglich mit dem Koppelelement 4 verbunden ist.

Dazu ist die Antriebsstange 3' des Linear-Antriebes 3 an ihrem Ende mit einem (Teil-)Kugelkopf 34a versehen, welcher in einer entsprechend angepassten Schale 34b sitzt. Diese Schale 34b ist mit dem Koppelelement 4 verbunden bzw. Teil des Koppelelementes 4.

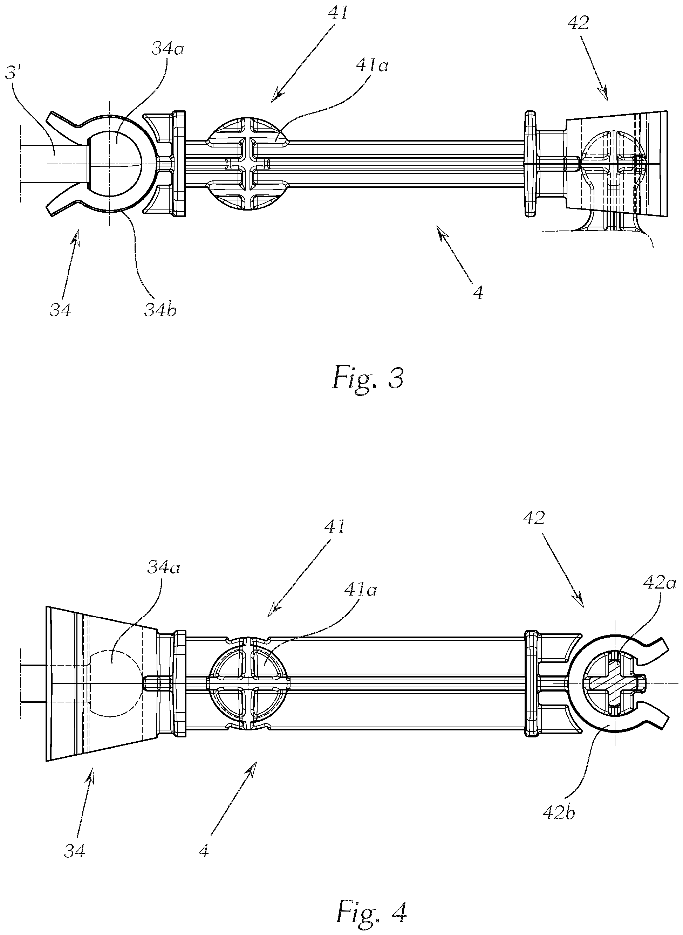

Kugelkopf 34a und Lagerschale 34b sind dabei derart ausgebildet, dass sich der Kugelkopf 34a in der Lagerschale 34b auf- und ab (vertikal) bewegen kann (normal auf die Blattebene in Figur 3). Ein geringfügiges Verdrehen des Kugelkopfes 34a um die Längsachse der Antriebesstange 3' kann konstruktionsbedingt möglich sein, ein Verdrehen des Kugelkopfes 34a um eine vertikale Achse durch die Lagerschale 34b ist hingegen (in Folge der gezeigten seitlichen Führungen) nicht möglich.

Das erste Lichtmodul 1, welches um zwei Achsen 11, 31 verschwenkbar ist, kann in Höhenrichtung auf- und ab verstellt werden (durch Verschwenken um die horizontale Achse 11), sowie links- und rechts um die vertikale Achse 31 (etwa zum Einstellen der Leuchtrichtung).

Das Verschwenken um die vertikale Achse 31 erfolgt mit einer eigenen Einstellvorrichtung 60 (manuell wie in Figur 1 gezeigt oder mit einem elektrischen Antrieb).

Bei einem solchen Scheinwerfer ist es wünschenswert, dass die Verschwenkbewegung des ersten Lichtmoduls 1 um seine vertikale Achse 31 nicht auf das zweite Lichtmodul 2 übertragen wird.

Um nun zu verhindern, dass das zweite Lichtmodul 2 in Folge einer Verschwenkbewegung des ersten Lichtmoduls 1 um seine vertikale Achse 31, welche über das Koppelelement übertragen werden könnte, ebenfalls verstellt wird, ist vorgesehen, dass die erste Verbindungsstelle 41, welche das erste Lichtmodul 1 mit dem Koppelelement 4 verbindet, in Form eines Kugelgelenkes bzw. kugelgelenksartig ausgebildet ist.

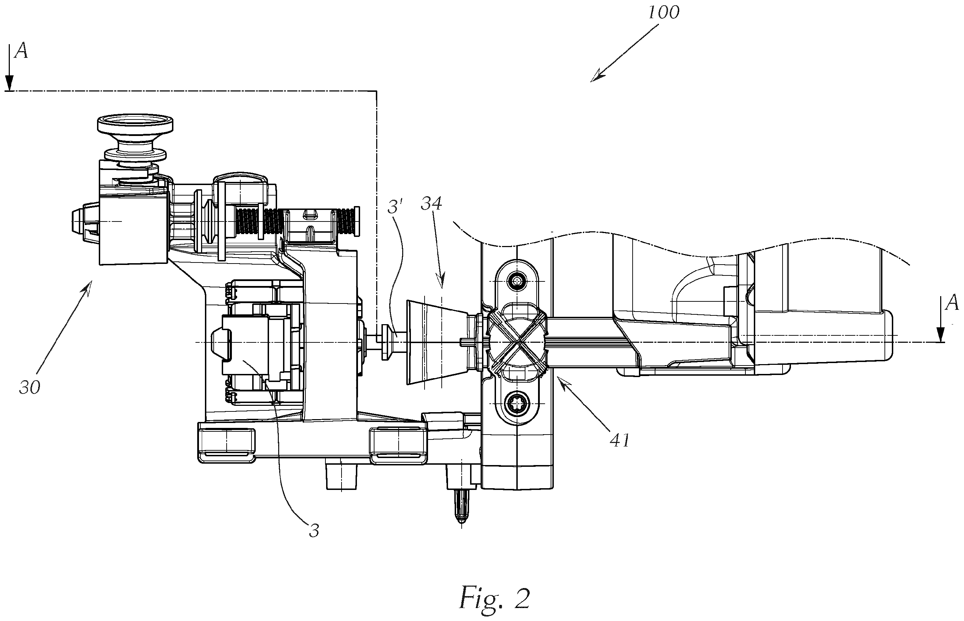

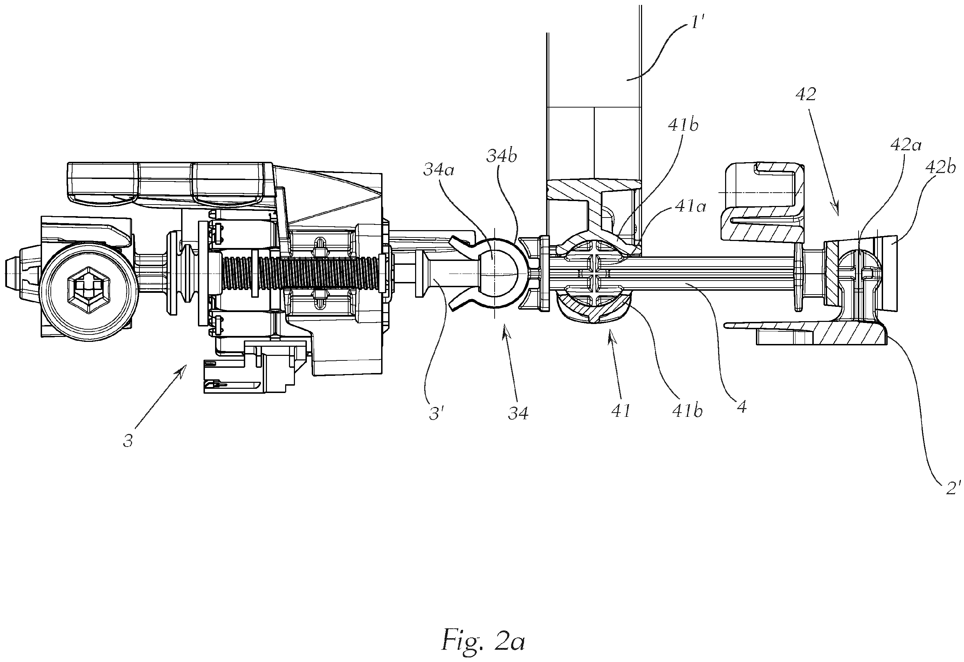

Konkret besteht dabei die Verbindungsstelle 41, wie dies den Figuren 2a, 3 und 4 gut zu entnehmen ist, aus einer Kugel bzw. Teilkugel(n) 41a, welche an dem Koppelelement 4 angeformt ist (sind), bzw. wird das Koppelelement 4 einstückig mit dieser bzw. diesen (Teil-)Kugel(n) 41a ausgebildet.

Diese Teilkugeln 41a sitzen in einer entsprechenden Kugelpfanne 41b, welche an dem Träger 1' angebracht ist. Aus montagetechnischen und konstruktiven Gründen ist dabei in dem gezeigten Beispiel die Kugelpfanne 41b zweiteilig ausgebildet, wobei ein Teil der Kugelpfanne 41b direkt mit dem Träger 1' verbunden, vorzugsweise einstückig mit diesem ausgebildet ist, und der zweite Teil der Kugelpfanne 41b als eigener Bauteil ausgebildet ist und mit dem Träger 1' verbunden wird (beispielsweise mit den beiden übereinanderliegenden Schrauben, wie in Figur 1 zu sehen).

Durch diese sphärische Lagerung des Koppelelementes 4 an dem ersten Lichtmodul 1 wird eine Verschwenkbewegung des ersten Lichtmoduls 1 um die vertikale Achse 31 nicht auf das Koppelelement 4 und somit auch nicht auf das zweite Lichtmodul 2 übertragen.

Um Toleranzen, insbesondere Bauteiltoleranzen ausgleichen zu können, ist die zweite Verbindungsstelle 42 derart ausgebildet, dass das Koppelelement 4 und das zweite Lichtmodul 2 zumindest in einer Horizontalebene (normal auf Vertikalachse 31) relativ zueinander bewegbar sind.

Dazu besteht die Verbindungsstelle 42 aus einem (Teil-)Kugelkopf 42a, welcher mit dem Träger 2' verbunden ist. Der (Teil-)Kugelkopf 42a sitzt in einer in einer entsprechend angepassten Schale 42b.

Diese Lagerschale 42b ist derart ausgebildet, dass sich die Kugel 42a nach links und rechts bewegen kann, d.h. verschieben lässt.

Wichtig ist allerdings, dass die Verbindungsstelle 42 derart ausgebildet ist, dass eine (zumindest begrenzte) relative Rotation des Koppelelementes 4 zu dem Träger 2' um eine horizontale Achse, welche durch die Verbindungsstelle 42 verläuft, möglich ist. Nachdem die Verbindungsstelle 42 bei einem Verschwenken des Trägers 2' um seine horizontale Achse 21 eine Kreisbahn beschreibt, ist eine solche Bewegungsmöglichkeit zwischen Koppelelement 4 und Träger 2' notwendig, da ansonsten die Verschwenkbewegung blockiert werden würde.

Durch die Ausgestaltung der Verbindungsstelle 42 wie in den Figuren dargestellt als Kugelkopf 42a in einer Lagerschale 42b ist dies sichergestellt.

Schließlich ist, noch einmal auf Figur 1 zurück kommend, vorgesehen, dass beide Lichtmodule 1, 2 bei einem Verschwenken um ihre horizontalen Achsen 11, 21 um den gleichen Winkelbetrag verschwenkt werden. Entsprechend ist vorteilhafterweise vorgesehen, dass der Normalabstand 51 der ersten Verbindungsstelle 41 zu der ersten Verschwenkachse 11 identisch zum Normalabstand 52 der zweiten Verbindungsstelle 42 zu der zweiten Verschwenkachse 21 ist.

## Patentansprüche

1. Scheinwerfer (100) für ein Kraftfahrzeug, umfassend:
-) eine erste optische Baueinheit (1), welche um eine erste Achse (11) verschwenkbar gelagert ist,
-) eine zweite optische Baueinheit (2), welche um eine zweite Achse (21) verschwenkbar gelagert ist,
wobei erste Achse (11) und zweite Achse (21) im Wesentlichen parallel zueinander verlaufen,
wobei zumindest eine Einstellvorrichtung (3, 30) zum gleichzeitigen Verschwenken der beiden optischen Baueinheiten (1, 2) um deren Achsen (11, 21) vorgesehen ist, wobei
die zumindest eine Einstellvorrichtung (3, 30) mit einem Koppelelement (4) beweglich verbunden ist und das Koppelelement (4) antreibt, und wobei das von der zumindest einen Einstellvorrichtung (3, 30) angetriebene Koppelelement (4) über eine erste Verbindungsstelle (41) beweglich mit der ersten Baueinheit (1) und über eine zweite Verbindungsstelle (42) beweglich mit der zweiten Baueinheit (2) verbunden ist,
wobei genau eine optische Baueinheit (1) weiters um eine zu den beiden Verschwenkachsen (11, 21) normal verlaufende Achse (31) verschwenkbar ist,
**dadurch gekennzeichnet, dass** jene Verbindungsstelle (42), welche das Koppelelement (4) mit jener Baueinheit (2) verbindet, welche lediglich um eine Achse (21) verschwenkbar gelagert ist, derart ausgebildet ist, dass das Koppelelement (4) und die Baueinheit (2) zumindest in einer Ebene normal auf die weitere, zu den beiden Verschwenkachsen (11, 21) normal verlaufende Verschwenkachse (31) der um zwei Achsen verschwenkbaren Baueinheit (1) relativ zueinander verschiebbar sind.

2. Scheinwerfer nach Anspruch 1, **dadurch gekennzeichnet, dass** das Koppelelement (4) als längliches Koppelelement, beispielsweise in Form einer Koppelstange ausgebildet ist.

3. Scheinwerfer nach Anspruch 1 oder 2, **dadurch gekennzeichnet, dass** das Koppelelement (4) starr ausgebildet ist.

4. Scheinwerfer nach einem der Ansprüche 1 bis 3, **dadurch gekennzeichnet, dass** die zumindest eine Einstellvorrichtung (3, 30) über eine Einstellvorrichtungs-Verbindungsstelle (34) beweglich mit dem Koppelelement (4) verbunden ist.

5. Scheinwerfer nach Anspruch 4, **dadurch gekennzeichnet, dass** die Einstellvorrichtungs-Verbindungsstelle (34), welche die zumindest eine Einstellvorrichtung (3, 30) mit dem Koppelelement (4) verbindet, an einem Ende des Koppelelementes (4) angeordnet ist.

6. Scheinwerfer nach einem der Ansprüche 1 bis 5, **dadurch gekennzeichnet, dass** eine der Verbindungsstellen (42) an einem Ende des Koppelelementes (4), insbesondere an dem der Einstellvorrichtungs-Verbindungsstelle (34) gegenüberliegenden Ende des Koppelelementes (4) angeordnet ist.

7. Scheinwerfer nach einem der Ansprüche 1 bis 6, **dadurch gekennzeichnet, dass** die beiden im Wesentlichen zueinander parallelen Achsen (11, 21) Horizontalachsen sind, welche vorzugsweise im Wesentlichen normal auf die optischen Achsen der optischen Baueinheiten (1, 2) stehen.

8. Scheinwerfer nach einem der Ansprüche 1 bis 7, **dadurch gekennzeichnet dass** die weitere, zu den beiden Verschwenkachsen (11, 21) normal verlaufende Achse (31), um welche genau eine optische Baueinheit
(1) verschwenkbar ist, eine Vertikalachse ist.

9. Scheinwerfer nach einem der Ansprüche 1 bis 8, **dadurch gekennzeichnet, dass** zumindest eine der beiden Verbindungsstellen (41, 42) derart ausgebildet ist, dass das Koppelelement (4) in Bezug auf die der Verbindungsstelle (41, 42) zugeordnete optische Baueinheit (1, 2) um eine Achse, welche parallel zu der Verschwenkachse (11, 21) der optischen Baueinheit (1, 2) verläuft, verschwenkbar ist.

10. Scheinwerfer nach einem der Ansprüche 1 bis 9, **dadurch gekennzeichnet, dass** jene Verbindungsstelle (41), welche das Koppelelement (4) mit der um eine weitere, zu den beiden Verschwenkachsen (11, 21) normal verlaufende Achse (31) verschwenkbaren Baueinheit (1) verbindet, derart ausgebildet ist, dass das Koppelelement (4) in Bezug auf die der Verbindungsstelle (41) zugeordnete optische Baueinheit
(1) um eine Achse, welche parallel zu der Verschwenkachse (11) der optischen Baueinheit (1) verläuft, beweglich ist.

11. Scheinwerfer nach einem der Ansprüche 1 bis 8, **dadurch gekennzeichnet, dass** zumindest eine der beiden Verbindungsstellen (41) in Form eines Kugelgelenkes bzw. kugelgelenksartig ausgebildet ist.

12. Scheinwerfer nach Anspruch 11, **dadurch gekennzeichnet, dass** jene Verbindungsstelle (41), welche das Koppelelement (4) mit jener Baueinheit (1) verbindet, welche um zwei Achsen (11, 31) verschwenkbar ist, als Kugelgelenk bzw. kugelgelenksartig ausgebildet ist.

13. Scheinwerfer nach einem der Ansprüche 1 bis 12,
**dadurch gekennzeichnet, dass** es
sich bei den optischen Baueinheiten um Linsen, Reflektoren oder Lichtmodule handelt.

14. Scheinwerfer nach einem der Ansprüche 1 bis 13,
**dadurch gekennzeichnet, dass** der
Normalabstand (51) der ersten Verbindungsstelle (41) zu der Verschwenkachse (11) der zugeordneten optischen Baueinheit (1) identisch zum Normalabstand (52) der zweiten Verbindungsstelle (42) zu der Verschwenkachse (21) der zugeordneten optischen Baueinheit (2) ist.

15. Scheinwerfer nach einem der Ansprüche 1 bis 14,
**dadurch gekennzeichnet, dass** die
zumindest eine Einstellvorrichtung (3) ein Linear-Antrieb, insbesondere ein Linear-Motor ist.

16. Scheinwerfer nach einem der Ansprüche 1 bis 15,
**dadurch gekennzeichnet, dass** die
zumindest eine Einstellvorrichtung (3) eine manuelle Einstellvorrichtung ist.

## Claims

1. headlamp (100) for a motor vehicle, comprising:
-) a first optical assembly (1), which is mounted so as to pivot about a first axis (11)
-) a second optical assembly (2) which is pivotably mounted about a second axis (21),
wherein the first axis (11) and the second axis (21) are substantially parallel to each other,
wherein at least one adjusting device (3, 30) is provided for simultaneously pivoting the two optical units (1, 2) about their axes (11, 21),
wherein the at least one adjusting device (3, 30) is movably connected to a coupling element (4) and drives the coupling element (4), and wherein the coupling element (4) driven by the at least one adjusting device (3, 30) is movably connected to the first structural unit (1) via a first connection point (41) and to the second structural unit (2) via a second connection point (42),
wherein exactly one optical unit (1) is further pivotable about an axis (31) extending normal to the two pivot axes (11, 21),
**characterized in that** that connecting point (42) which connects the coupling element (4) to that structural unit (2) which is mounted so as to be pivotable about only one axis (21) is designed in such a way that the coupling element (4) and the structural unit (2) can be displaced relative to one another at least in a plane normal to the further pivot axis (31), running normal to the two pivot axes (11, 21), of the structural unit (1) which can be pivoted about two axes.

2. Headlamp according to claim 1, **characterized in that** the coupling element (4) is designed as an elongated coupling element, for example in the form of a coupling rod.

3. Headlamp according to claim 1 or 2, **characterized in that** the coupling element (4) is rigid.

4. Headlamp according to any one of claims 1 to 3, **characterized in that** the at least one adjusting device (3, 30) is movably connected to the coupling element (4) via an adjusting device connection point (34).

5. Headlamp according to claim 4, **characterized in that** the adjusting device connection point (34), which connects the at least one adjusting device (3, 30) to the coupling element (4), is arranged at one end of the coupling element (4).

6. Headlamp according to one of claims 1 to 5, **characterized in that** one of the connecting points (42) is arranged at one end of the coupling element (4), in particular at the end of the coupling element (4) opposite the adjusting device connecting point (34).

7. Headlamp according to any one of claims 1 to 6, **characterized in that** the two substantially mutually parallel axes (11, 21) are horizontal axes which are preferably substantially normal to the optical axes of the optical assemblies (1, 2).

8. Headlamp according to one of the claims 1 to 7, **characterized in that** the further axis (31) running normal to the two swivel axes (11, 21), about which exactly one optical assembly unit (1) can be swiveled, is a vertical axis.

9. Headlamp according to one of the claims 1 to 8, **characterized in that** at least one of the two connecting points (41, 42) is designed in such a way that the headlamp element (4) can be pivoted with respect to the optical unit assigned to the connecting point (41, 42) about an axis which runs parallel to the pivot axis (11, 21) of the optical unit (1, 2).

10. Headlamp according to one of claims 1 to 9, **characterized in that** that connecting point (41) which connects the coupling element (4) to the structural unit (1) which can be pivoted about a further axis (31) running normal to the two pivot axes (11, 12) is designed in such a way that the coupling element (4) can be moved with respect to the optical structural unit (1) assigned to the connecting point (41) about an axis which runs parallel to the pivot axis (11) of the optical structural unit (1).

11. Headlamp according to any one of claims 1 to 8, **characterized in that** at least one of the two connecting points (41) is designed in the form of a ball joint or ball joint-like.

12. Headlamp according to claim 11, **characterized in that** the joint (41) connecting the coupling element (4) to the assembly unit (1) which is pivotable about two axes (11, 31) is designed as a ball joint.

13. Headlamp according to any one of claims 1 to 12, **characterized in that** the optical units are lenses, reflectors or light modules.

14. Headlamp according to one of the claims 1 to 13, **characterized in that** the normal distance (51) of the first connection point (41) from the pivot axis (11) of the associated optical assembly unit (1) is identical to the normal distance (52) of the second connection point (42) from the pivot axis (21) of the associated optical assembly unit (2).

15. Headlamp according to one of claims 1 to 14, **characterized in that** the at least one adjusting device (3) is a linear drive, in particular a linear motor.

16. Headlamp according to one of claims 1 to 15, **characterized in that** the at least one adjusting device (3) is a manual adjusting device.

## Revendications

1. Projecteur (100) pour un véhicule à moteur, comprenant :
-) un premier ensemble optique (1) qui est monté de manière à pouvoir pivoter autour d'un premier axe (11)
-) un deuxième ensemble optique (2) qui est monté pivotant autour d'un deuxième axe (21),
dans lequel le premier axe (11) et le second axe (21) sont sensiblement parallèles l'un à l'autre,
dans lequel au moins un dispositif de réglage (3, 30) est prévu pour faire pivoter simultanément les deux unités optiques (1, 2) autour de leurs axes (11, 21),
dans lequel le au moins un dispositif de réglage (3, 30) est relié de manière mobile à un élément d'accouplement (4) et entraîne l'élément d'accouplement (4), et dans lequel l'élément d'accouplement (4) entraîné par le au moins un dispositif de réglage (3, 30) est relié de manière mobile à la première unité structurelle (1) par l'intermédiaire d'un premier point de connexion (41) et est relié de manière mobile à la seconde unité structurelle (2) par l'intermédiaire d'un second point de connexion (42),
dans lequel exactement une unité optique (1) peut en outre pivoter autour d'un axe (31) s'étendant normalement aux deux axes de pivotement (11, 21),
**caractérisé en ce que** le point de liaison (42) qui relie l'élément d'accouplement (4) à l'unité structurelle (2) montée de manière à pouvoir pivoter autour d'un seul axe (21) est conçu de telle sorte que l'élément d'accouplement (4) et l'unité structurelle (2) peuvent être déplacés l'un par rapport à l'autre au moins dans un plan normal à l'autre axe de pivotement (31), s'étendant normalement aux deux axes de pivotement (11, 21), de l'unité structurelle (1) pouvant pivoter autour de deux axes.

2. Projecteur selon la revendication 1, **caractérisé en ce que** l'élément d'accouplement (4) est conçu comme un élément d'accouplement allongé, par exemple sous la forme d'une tige d'accouplement.

3. Projecteur selon la revendication 1 ou 2, **caractérisé en ce que** l'élément de couplage (4) est rigide.

4. Projecteur selon l'une quelconque des revendications 1 à 3, **caractérisé en ce que** l'au moins un dispositif de réglage (3, 30) est relié de manière mobile à l'élément d'accouplement (4) par l'intermédiaire d'un point de raccordement (34) du dispositif de réglage.

5. Projecteur selon la revendication 4, **caractérisé en ce que** le point de raccordement du dispositif de réglage (34) reliant le au moins un dispositif de réglage (3, 30) à l'élément de couplage (4) est disposé à une extrémité de l'élément de couplage (4).

6. Projecteur selon l'une quelconque des revendications 1 à 5, **caractérisé en ce que** l'un des points de connexion (42) est disposé à une extrémité de l'élément de couplage (4), notamment à l'extrémité de l'élément de couplage (4) opposée au point de connexion (34) du dispositif de réglage.

7. Projecteur selon l'une quelconque des revendications 1 à 6, **caractérisé en ce que** les deux axes (11, 21) sensiblement parallèles entre eux sont des axes horizontaux qui sont de préférence sensiblement normaux aux axes optiques des ensembles optiques (1, 2).

8. Projecteur selon l'une quelconque des revendications 1 à 7, **caractérisé en ce que** l'autre axe (31) s'étendant normalement aux deux axes de pivotement (11, 21), autour desquels exactement un ensemble optique (1) peut pivoter, est un axe vertical.

9. Projecteur selon l'une des revendications 1 à 8, **caractérisé en ce qu'**au moins l'un des deux points de connexion (41,42) est conçu de telle sorte que l'élément de projecteur (4) peut pivoter par rapport à l'ensemble optique associé au point de connexion (41, 42) autour d'un axe qui s'étend parallèlement à l'axe de pivotement (11, 21) de l'ensemble optique (1, 2).

10. Projecteur selon l'une des revendications 1 à 9, **caractérisé en ce que** le point de liaison (41) qui relie l'élément de couplage (4) au bloc optique (1) pouvant pivoter autour d'un autre axe (31) perpendiculaire aux deux axes de pivotement (11, 12) est conçu de telle sorte que l'élément de couplage (4) peut être déplacé par rapport au bloc optique (1) associé au point de liaison (41) autour d'un axe parallèle à l'axe de pivotement (11) du bloc optique (1).

11. Projecteur selon l'une quelconque des revendications 1 à 8, **caractérisé en ce qu'**au moins l'un des deux points de liaison (41) est réalisé sous la forme d'une rotule ou d'une articulation à rotule.

12. Projecteur selon la revendication 11, **caractérisé en ce que** le point de liaison (41) qui relie l'élément d'accouplement (4) à l'ensemble (1) qui peut pivoter autour de deux axes (11, 31) est conçu comme une articulation à rotule ou une articulation à rotule.

13. Projecteur selon l'une des revendications 1 à 12, **caractérisé en ce que** les unités optiques sont des lentilles, des réflecteurs ou des modules lumineux.

14. Projecteur selon l'une des revendications 1 à 13, **caractérisé en ce que** la distance normale (51) du premier point de connexion (41) à l'axe de pivotement (11) de l'ensemble optique associé (1) est identique à la distance normale (52) du deuxième point de connexion (42) à l'axe de pivotement (21) de l'ensemble optique associé (2).

15. Projecteur selon l'une quelconque des revendications 1 à 14, **caractérisé en ce que** l'au moins un dispositif de réglage (3) est un entraînement linéaire, notamment un moteur linéaire.

16. Projecteur selon l'une des revendications 1 à 15, **caractérisé en ce que** l'au moins un dispositif de réglage (3) est un dispositif de réglage manuel.
